# EUROPEAN PATENT APPLICATION

(11) **EP 4 553 319 A1**
(43) Date of publication of application: **14.05.2025**
(21) Application number: 24210790.2
(22) Date of filing: 05.11.2024
(51) Int. Cl.: F04C 18/02, F04B 39/10, F04B 53/10, F04C 29/12

(54) **CHECK VALVE FOR A REFRIGERANT COMPRESSOR**

(30) Priority: 09.11.2023 US 202363597396 P
(71) Applicant: BITZER Kühlmaschinenbau GmbH, 71065 Sindelfingen (DE)
(72) Inventor: Ransiear, Paul, Baldwinsville, NY, 13027 (US)
(74) Representative: Hoeger, Stellrecht & Partner Patentanwälte mbB

(57) **Abstract**

Check valve for a refrigerant compressor comprising a valve housing (30), a valve chamber (56) arranged within the valve housing, a valve element (72) arranged in the valve chamber and being moveable in said valve chamber between a bottom section (34) and a stroke limiter (54), the valve element (72) in a closing position prevents a flow of refrigerant out of said valve chamber through a bottom opening (36) and in an opening position the valve element is abutting on a stop surface of said stroke limiter (54), wherein in the opening position of the valve element a flow of refrigerant leaves the valve chamber (56) through at least one outlet passage (94,114) which comprises at least one flow accelerating passage (92) and therein provides a flow region of reduced refrigerant pressure with respect to the refrigerant pressure within the valve chamber and wherein at least one connection channel (102) extending in said stroke limiter (54) comprises an opening arranged close to the flow region of reduced refrigerant pressure for capturing the reduced refrigerant pressure and for transferring said reduced refrigerant pressure to an opening arranged in an area of the stop surface of the stroke limiter (54) on order to support retaining of the valve element in its opening position.

## Description

The invention refers to an check valve for a refrigerant compressor comprising a valve housing having a bottom section with a bottom opening enabling a flow of refrigerant into and out of a valve chamber arranged within the valve housing, said valve chamber extending between the bottom section and a stroke limiter arranged at a distance from said bottom section, a valve element arranged in the valve chamber and being moveable in said valve chamber between said bottom section and said stroke limiter, the valve element in a closing position is abutting on a sealing surface of the bottom section and prevents a flow of refrigerant out of said valve chamber through said bottom opening, and in an opening position the valve element is abutting on a stop surface of said stroke limiter wherein in the opening position in the valve element a flow of refrigerant after having entered the valve chamber leaves the valve chamber through at least one outlet passage.

Such check valves are known in prior art. For example US 9,039,384 B2 discloses such an check valve.

The problem of said kind of check valves is that depending on varying flow rates the position of the valve element in its opening position is unstable so that the check valve due to movement of the valve element is going to "rattle" such that vibrations and pressure pulsations disturb the fluid mass flow.

In particular such "rattle" can lead to destruction or breakage of the valve and thus destruction of the whole compressor as parts of the valve might enter the scrolls.

It is the object of the present invention to provide a check valve for a refrigerant compressor which is able to maintain the valve element in its opening position as long as possible, so that the valve element only in case of a back flow into the check valve leaves its opening position and moves into its closing position.

This object is solved by a check valve having the features defined above, wherein the at least one outlet passage comprises at least one flow accelerating passage and therein provides a flow region of reduced refrigerant pressure with respect to the refrigerant pressure within the valve chamber and wherein at least one connection channel extending in said stroke limiter comprises an opening arranged close to the flow region of reduced refrigerant pressure for capturing the reduced refrigerant pressure and for transferring said reduced refrigerant pressure to an opening arranged in an area of the stop surface of the stroke limiter in order to support retaining of the valve element in its opening position.

The advantage of the present invention has to be seen in the fact that the outlet passage of the check valve is provided with at least one flow accelerating passage, in which, by using the Venturi Effect, a flow region of reduced refrigerant pressure with respect to the refrigerant pressure within the valve chamber appears such that this reduced refrigerant pressure can be transferred by at least one connection channel extending in said stroke limiter to an opening arranged in an area of the stop surface of the stroke limiter in order to support retaining of the valve element in its opening position because the valve element on its side directed towards the valve chamber experiences the refrigerant pressure within the valve chamber and on its side opposite thereto, e.g. its side directed towards the stop surface of the stroke limiter, experiences the reduced refrigerant pressure so that this pressure difference between the two sides of the valve element supports retaining of the valve element in its opening position abutting on the stop surface of the stroke limiter.

These advantages are in particular important if propane is used as refrigerant.

Further these advantages are important in case of high pressure ratios and/or low mass flow because the valve retention during operation is better, in particular due to no rattle and the valve still close efficiently at shut off.

The capturing of the reduced refrigerant pressure can take place in various locations within the flow accelerating passage, for example in the middle of the flow accelerating.

However, according to the present invention a preferred embodiment provides that the opening of the connection channel is located adjacent an outlet end of said flow accelerating passage.

This location of the connection channel has the advantage that in this case the connection channel can be also used to capture a back flow through the check valve which would enter the check valve and the flow accelerating passage at their outlet end so that the opening of the connection channel can also easily capture such a back flow and transfer the pressure of said back flow to said opening arranged in an area of the stop surface in order to assist in moving the valve element into its closing position.

A particular advantageous design provides that the opening of the connection channel is located at the transition of a surface section of the stroke limiter limiting the flow accelerating passage and a surface section of the stroke limiter extending outside of said flow accelerating passage and opposite to said stop surface.

This design on one hand provides capturing of the reduced refrigerant pressure in order to support retaining of the valve element in its opening position but on the other hand in case of a back flow easily transfers the pressure of the back flow to the opening arranged in an area of the stop surface of the stroke limiter in order to move the valve element to its closing position in case of such back flow.

The design of the opening arranged in an area of the stop surface has not been further defined in detail.

A preferred solution provides that the opening in the stop surface of the stroke limiter is an opening of a pocket arranged in the stroke limiter and open to the stop surface.

Such a pocket enables to increase the surface within which the pressure acts on the valve element according to the pressure experienced in the opening of the connection channel close to the flow region of reduced refrigerant pressure.

Further it is of particular advantage if the opening is at least a section of an opening of a circular groove or in particular a circular groove extending within the stroke limiter and open to the stop surface in order to maximize the surface of the valve element on which the pressure can act on the valve element when abutting on the stop surface.

In principle the valve element could be of different designs as long as it enables proper movement of the valve element between its closing position and its opening position.

However, in order to maximize the flow of refrigerant through the check valve in the opening position of the valve element it is of advantage if said valve element is freely moveable between its opening and closing position, so that the movement of the valve element is only subject to the pressure of the refrigerant acting on opposite sides of said valve element without any influence of for example an element enabling guidance between the closing position and the opening position of the valve element by bending.

Contrary thereto allowing the valve element to be freely moveable between its opening and closing positions enables a fast response of said valve element in reaction to different pressures on opposite sides thereof.

According to such a freely moveable valve element it is provided that the valve element in its opening position extends essentially parallel to its closing position.

Further according to a freely moveable valve element the valve element can quickly move into its opening position releasing the flow of refrigerant entering the valve chamber through said bottom opening to exit at least in part through said flow accelerating passage.

According to the explanations given above no details have been given with respect to the arrangement of said flow accelerating section.

For example said flow accelerating section extends towards an outlet opening of the housing of said check valve arranged on a side of said stroke limiter opposite to said bottom section.

In particular said outlet opening is designed such that in the opening position of the valve element the entire flow of refrigerant leaving the valve chamber through the at least one outlet passage will flow through the outlet opening of the housing.

According to a particular simple design it is provided said said flow accelerating passage extends between an outer surface of the stroke limiter and a surface of the housing facing said outer surface.

According to a specific design is provided that said at least one flow accelerating passage extends transverse to said valve element in its opening position.

Further in a simplified design it is of particular advantage if said flow accelerating passage extends transverse to said bottom section.

In particular in such a design the outer surface of said stroke limiter and the inner surface of said outer section of said housing extend transverse to said bottom section of said housing.

According to another advantageous design it is provided that said flow accelerating passage extends along a section of an upper surface of said stroke limiter arranged on said stroke limiter on a side opposite to said valve chamber.

In this case an advantageous design provides that said flow accelerating passage extends between the section of said upper surface of said stroke limiter and a surface of a top section of said housing facing the section of said upper surface.

According to the specific designs explained before the flow accelerating passage is arranged between the stroke limiter and part of the housing.

However, another advantageous embodiment, which for example can also be combined with the embodiments explained before, provides that the flow accelerating passage extends through the stroke limiter only.

This means that the stroke limiter itself is provided with the flow accelerating passage so that the flow accelerating passage is fully independent from the design of the housing and the connection between the housing and the stroke limiter.

In particular such an advantageous design provides that the valve element is provided with an opening which in the opening position of the valve element releases a flow of refrigerant from said outlet chamber through said flow accelerating passage extending through said stroke limiter.

In this case the opening provided in the valve element is arranged such that in the closing position of the valve element the opening is directed towards a closed body portion of the bottom section of the housing.

When explaining the various embodiments before it is only defined that the at least one flow accelerating passage is provided.

However, in order to improve the retaining of the valve element in its opening position it is of advantage if a plurality of flow accelerating passages is provided.

Further it is of advantage if a plurality of connection channels is provided in said stroke limiter which connection channels comprise an opening capturing the reduced refrigerant pressure and also an opening arranged in the area of the stop surface in order to apply the reduced refrigerant pressure to the side of the valve element abutting on the stop surface.

In particular each opening can end in one pocket open to the stop surface or in one or more enlarged pockets in which plurality of openings end.

A check valve according to the present invention can be used in various types of compressors.

One advantageous embodiment provides a scroll compressor provided with a check valve having one or more of the features explained before wherein said check valve is arranged between an outlet of the scroll unit and an outlet chamber arranged within an outer housing of said scroll compressor.

In such case the check valve is used as an anti rotation valve preventing a back flow from said outlet chamber arranged within said scroll compressor to act on the scroll unit, in particular in case the scroll unit is not driven by the motor.

In order to optimize the operation of such a valve in a scroll compressor it is provided that said check valve is directly mounted on an outlet of the scroll unit of said scroll compressor so that the check valve in its closing position prevents any back flow of compressed refrigerant within the scroll compressor arranged subsequent to said check valve.

According to a preferred solution cross section of said outlet passage which comprises the at least one flow accelerating passage corresponds to 100% to 200% if a cross section of the outlet of the scroll unit in order to optimize the support for retaining said valve element in abutment on said stop surface.

Another advantageous embodiment provides that said check valve is arranged between an outlet chamber arranged within outer housing of said scroll compressor and a piping connection on said outer housing so that in this case the check valve is only decoupling the compressor from all the piping of a refrigerant circuit following said piping connection but in this case the check valve has a minor anti rotation function for the scroll unit because all the volume of the compressed refrigerant between the outlet of the scroll unit and in particular the compressed refrigerant in the outlet chamber within the outer housing of said scroll compressor can act on the scroll unit to rate if its not driven.

However, an check valve according to the present invention can be also used in other compressors, for example piston compressors provided with an outlet chamber and an outlet channel.

In this case the check valve is preferably arranged between an outlet chamber of an outlet channel of the compressor in order to decouple the pressure of the refrigerant in the outlet chamber from the pressure of refrigerant in the outlet channel, which decoupling for example is of advantage if the compressor is provided with a control valve enabling connection of an inlet chamber and an outlet chamber of said compressor in order to reduce the flow of compressed refrigerant.

In such a design it is of particular advantage if said outlet valve is arranged on a cylinder head covering a valve plate of the compressor.

Thus, the description above of solutions according to the invention comprises in particular the different combinations of features that are defined by the sequentially numbered embodiments below:
1. Check valve (10) for a refrigerant compressor (20) comprising a valve housing (30) having a bottom section (34) with a bottom opening (36) enabling a flow of refrigerant into and out of a valve chamber (56) arranged within the valve housing (30), said valve chamber (56) extending between the bottom section (34) and a stroke limiter (54) arranged at a distance from said bottom section (34),
   a valve element (72) arranged in the valve chamber (56) and being moveable in said valve chamber (56) between said bottom section (34) and said stroke limiter (54),
   the valve element (72) in a closing position is abutting on a sealing surface (74) of the bottom section (34) and prevents a flow of refrigerant out of said valve chamber (56) through said bottom opening (36) and in an opening position the valve element (72) is abutting on a stop surface (76) of said stroke limiter (54)
   wherein in the opening position of the valve element (72) a flow of refrigerant after having entered the valve chamber (56) leaves the valve chamber (56) through at least one outlet passage (94, 114) wherein the at least one outlet passage (94, 114) comprises at least one flow accelerating passage (92) and therein provides a flow region of reduced refrigerant pressure (P2) with respect to the refrigerant pressure (P1) within the valve chamber (56) and wherein at least one connection channel (102) extending in said stroke limiter (54) comprises an opening (104) arranged close to the flow region of reduced refrigerant pressure (P2) for capturing the reduced refrigerant pressure (P2) and for transferring said reduced refrigerant pressure (P2) to an opening (106) arranged in an area of the stop surface (76) of the stroke limiter (54) on order to support retaining of the valve element (72) in its opening position.
2. Check valve according to embodiment 1, wherein the opening (104) of the connection channel (102) is located adjacent an outlet end (96) of said flow accelerating passage (92).
3. Check valve according to embodiment 1 or 2, wherein the opening (104) of the connection channel (102) is located at the transition of a surface section (82, 88) of the stroke limiter (54) limiting the flow accelerating passage (92, 92', 92") and a surface section (88) of the stroke limiter (54) extending outside of said flow accelerating passage (92) and opposite to said stop surface (76).
4. Check valve according to one of the preceding embodiment, wherein the opening (106) in the stop surface (76) of the stroke limiter (54) is an opening of a pocket (106) arranged in the stroke limiter (54) and open to the stop surface (76).
5. Check valve according to one of the preceding embodiments, wherein the opening (106) is at least a section of an opening of a circular groove extending within the stroke limiter (54) and open to the stop surface (76).
6. Check valve according to one of the preceding embodiments, wherein said valve element (72) is freely moveable between its opening and closing position.
7. Check valve according to one of the preceding embodiments, wherein the valve element (72) in its opening position extends essentially parallel to its closing position.
8. Check valve according to one of the preceding embodiments, wherein the valve element (72) in its opening position releases the flow of refrigerant entering the valve chamber (56) through said bottom opening (36) to exit at least in part through said flow accelerating passage (92).
9. Check valve according to one of the preceding embodiments, wherein said flow accelerating section (92) extends towards an outlet opening (86) of the housing (30) of said check valve (10) arranged on a side of said stroke limiter (54) opposite to said bottom section (34).
10. Check valve according to one of the preceding embodiments, wherein said flow accelerating passage (92) extends between an outer surface (82, 88) of the stroke limiter (54) and a surface (84, 144) of the housing (30) facing said outer surface (82, 88).
11. Check valve according to embodiment 10, wherein said at least one flow accelerating passage (92) extends transverse to said valve element (72) in its opening position.
12. Check valve according to embodiment 10 or 11, wherein said flow accelerating passage (92) extends transverse to said bottom section (34).
13. Check valve according to one of embodiments 10 to 12, wherein the outer surface (82, 88) of said stroke limiter (54) and said inner surface (84) of said outer section (32) of said housing (30) extend transverse to said bottom section (34) of said housing (30).
14. Check valve according to one of embodiments 1 to 10, wherein said flow accelerating passage (92") extends along a section of an upper surface (88) of said stroke limiter (54) arranged on said stroke limiter (54) on a side opposite to said valve chamber (56).
15. Check valve according to embodiment 14, wherein said flow accelerating passage (92") extends between the section of said upper surface (88) of said stroke limiter (54) and a surface (144) of a top section (142) of said housing (30) facing the section of said upper surface (88).
16. Check valve according to one of the preceding embodiments, wherein the flow accelerating passage (92') extends through the stroke limiter (54') only.
17. Check valve according to embodiment 16, wherein valve element (72') is provided with an opening (132) which in the opening position of valve element (72') releases a flow of refrigerant from said outlet chamber (56) through said flow accelerating passage (92) extending through said stroke limiter (54').
18. Check valve according to one of the preceding embodiments, wherein a plurality of flow accelerating passages (92) is provided.
19. Check valve according to one of the preceding embodiments, wherein a plurality of connection channels (102) is provided in said stroke limiter (54).
20. Scroll compressor provided with an check valve (10), according to one of embodiments 1 to 19, wherein said check valve (10) is arranged between an outlet (224) of the scroll unit (210) and an outlet chamber (254) arranged within an outer housing (200) of said scroll compressor (20).
21. Scroll compressor according to embodiment 20, wherein said check valve (10) is directly mounted on an outlet (224) of the scroll unit (210) of said scroll compressor (20).
22. Scroll compressor according to embodiment 21, wherein a cross section of said outlet passage (94) which comprises at least one flow accelerating passage (92) corresponds to 100% to 200% of a cross section of the outlet (224) of the scroll unit (210).
23. Scroll compressor provided with a check valve (10) according to one of embodiments 1 to 19, wherein said check valve (10) is arranged between an outlet chamber (254') arranged within the outer housing (200') of said scroll compressor (22') and a piping connection (258') on said outer housing (200').
24. Compressor provided with a check valve (10) according to one of embodiments 1 to 19, wherein said check valve (10) is arranged between an outlet chamber (318) and an outlet channel (336) of the compressor 20", 20‴).
25. Compressor according to embodiments 24, wherein said check valve (10) is arranged on a cylinder head (332) covering a valve plate (312) of the compressor (20", 20‴).

Further features and advantages of the present invention are subject matter of the detailed specification and the drawings.

In the drawings:

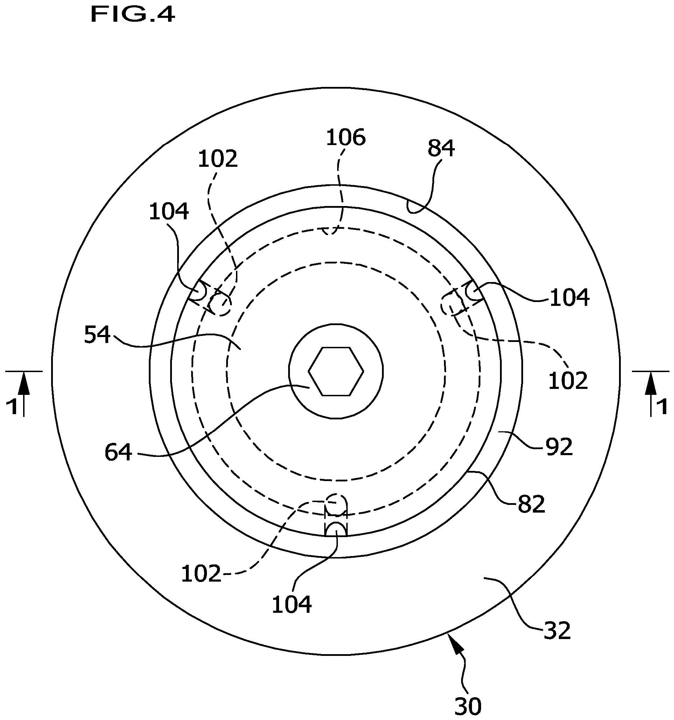

- Fig. 1: shows a sectional view of a first embodiment of a check valve along lines 1-1 in Fig. 4 in a closing position of a valve element;
- Fig. 2: shows a sectional view according to Fig. 1 in an opening position of the valve element;
- Fig. 3: shows a sectional view along lines 3-3 in Fig. 2;
- Fig. 4: shows a top view on the first embodiment in direction of to arrow A in Fig. 1;
- Fig. 5: shows a sectional view similar to Fig. 1 of a second embodiment of the check valve according to the present invention;
- Fig. 6: shows a top view similar to Fig. 4 of the second embodiment;
- Fig. 7: shows a sectional view similar to Fig. 1 of a third embodiment of the check valve;
- Fig. 8: shows a sectional view similar to Fig. 2 of the third embodiment of the check valve;
- Fig. 9: shows a top view similar to Fig. 4 of the third embodiment of the present invention;
- Fig. 10: shows a sectional view similar to Fig. 1 of a fourth embodiment of the check valve;
- Fig. 11: shows a sectional view through a first embodiment of a scroll compressor provided with the first embodiment of a check valve according to the present invention;
- Fig. 12: shows a sectional view similar to Fig. 11 of a scroll compressor according to a second embodiment provided with a check valve according to the first embodiment;
- Fig. 13: shows a sectional view through an upper portion of a cylinder housing provided with a valve element and a cylinder head as well as with a first embodiment of the check valve according to the first embodiment mounted on the cylinder head and
- Fig. 14: shows a sectional view similar to Fig. 13 provided with a fourth embodiment of a check valve according to the present invention mounted on the cylinder head.

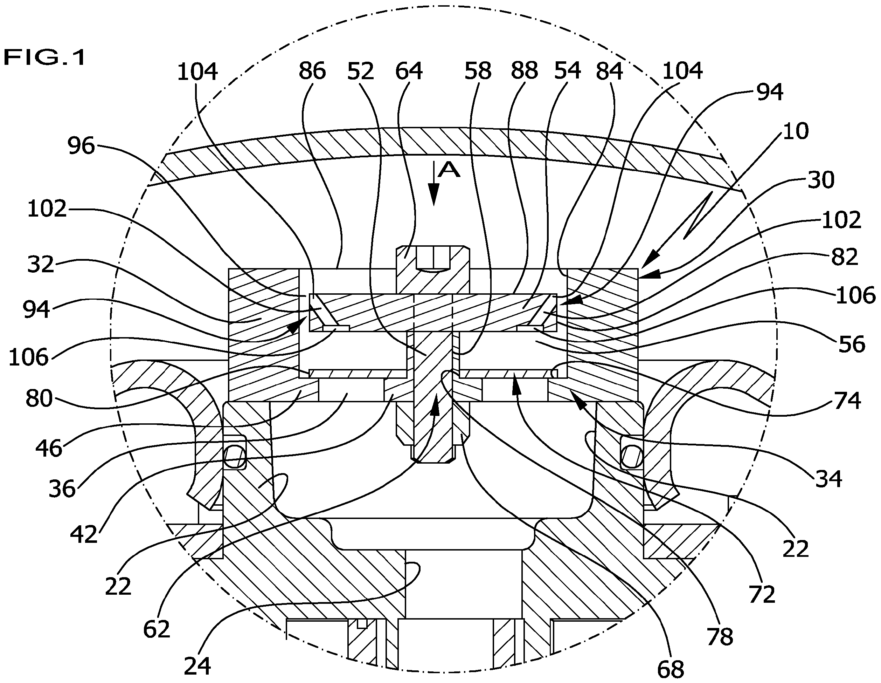

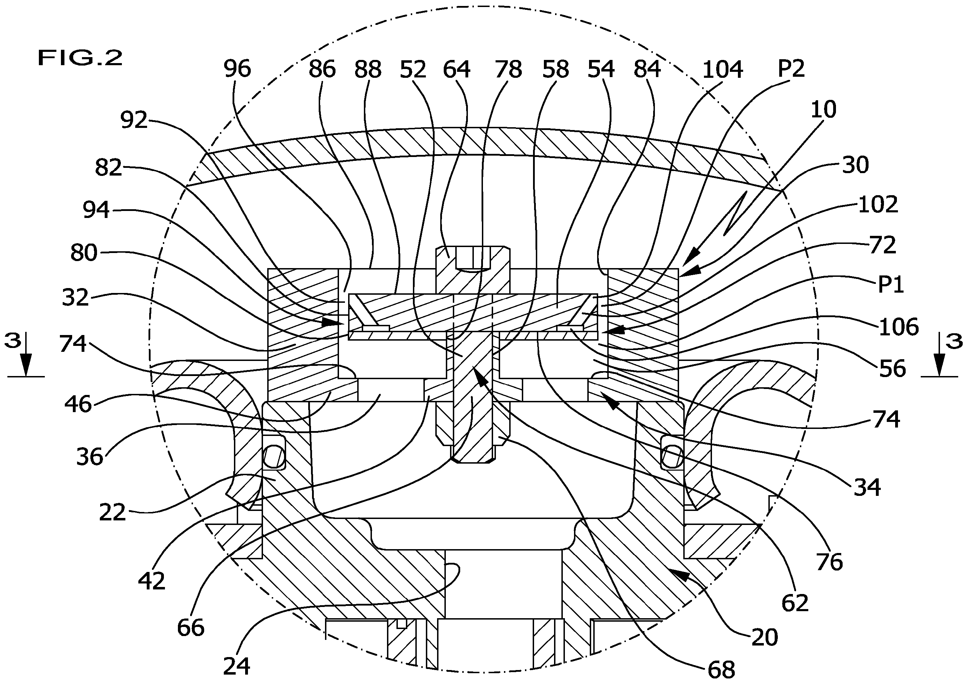

A first embodiment of a check valve 10, shown in Figs. 1 and 2 for a refrigerant compressor 20, which will be explained later in detail, comprises a housing 30 having an outer section 32 as well as a bottom section 34 which outer section 32 surrounds bottom section 34 and for example extends transverse to bottom section 34.

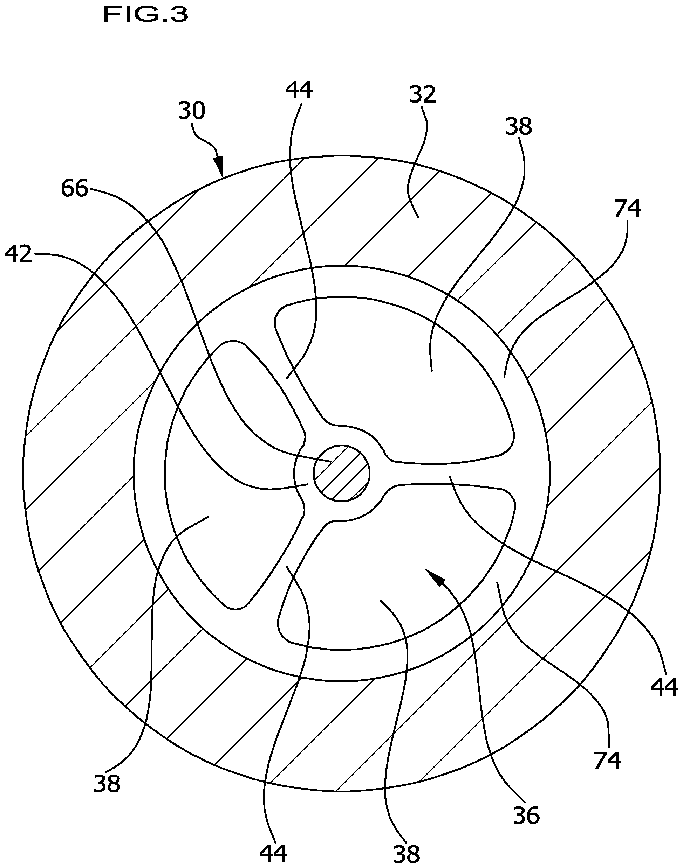

Bottom section 34 is mounted for example on a collar 22 connecting housing 30 of check valve 10 with a compressor outlet 24 provided with bottom opening 36 which - as shown in Fig. 3 - comprises a plurality of ring shaped open sections 38 extending around a central portion 42 and within an outer ring body 46 supporting outer section 32 of housing 30.

Arms 44 by extending between central body 42 to outer ring body 46 separate ring shaped open sections 38 which extend between subsequent arms 44.

Central body 42 of bottom section 34 carries a central support 52, for example represented by a screw 62, which extends from central body 42 in direction towards a stroke limiter 54 and supports stroke limiter 54 arranged at a distance from bottom section 34 in order to form a valve chamber 56 extending between said bottom section 34 and said stroke limiter 54 and being surrounded by outer section 32 of housing 30.

Further central support 52 is surrounded by a guide sleeve 58 extending in valve chamber 56 from bottom section 34 to stroke limiter 54.

Central support 52 when formed by a screw 62 comprises a head 64 and a threaded section 66 extending trough stroke limiter 54, within guide sleeve 58 and through central body 42 and carries a nut 68 threaded on threaded section 66 on its portion extending through central body 42 and beyond bottom section 34 on a side opposite to valve chamber 56.

Within valve chamber 56 there is arranged a valve element 72 which is guided by guide sleeve 58 in order to move between a closing position, shown in Fig. 1, in which valve element 72 is abutting on a sealing surface 74 of bottom section 34 which is arranged on bottom section 34 on its side directed towards valve chamber 56, and an opening position in which valve element 72 abuts an stroke limiter 54.

Valve element 72 is designed to close bottom opening 36 when abutting on sealing surface 74 in order to prevent a flow of refrigerant out of valve chamber 56 through bottom opening 36 in direction of outlet 22 of compressor 20.

In its closing position valve element 72 fully covers bottom opening 36 comprising ring shaped open sections 38 by sealingly abutting on sealing surface 74 which at least is provided on central body 42 and outer ring body 46 of bottom section 34.

Further in its opening position shown in Fig. 2 valve element 72 is moved towards stroke limiter 54 and abutting on stopp surface 76 of stroke limiter 54 which is arranged on a side of stroke limiter 54 directed towards valve chamber 56 and allows a flow of refrigerant, for example exiting from compressor outlet 24, through bottom opening 36 into valve chamber 56.

In order to move between closing position shown in Fig. 1 and the opening position shown in Fig. 2 valve element 72 is provided with a central opening 78 surrounding guide sleeve 58 and being guided by guide sleeve 58 during the movement between the closing and opening positions.

In its opening position valve element 72 according to the first embodiment has an outer rim 80 having a radial extension with respect to central post 52 which at maximum corresponds to the radial extension of outer surface 82 of stroke limiter 54 transverse to central support 52.

Further outer section 32 is provided with an inner surface 84 extending from bottom section 34 around valve chamber 56 and around outer surface 82 of stroke limiter 54 and even beyond stroke limiter 54 up to an outlet opening 86 of valve 10 which is arranged on a side of stroke limiter 54 opposite to valve chamber 56.

According to the first embodiment outer surface 82 of stroke limiter 54 together with a portion of inner surface 84 facing outer surface 82 form an outlet passage 94 through which a flow of refrigerant entering valve chamber 56 through bottom opening 36 can escape from valve chamber 56 a flow accelerating passage 92 formed by at least a ring segment extending around stroke limiter 54, preferably fully around stroke limiter 54, and according to the first embodiment the flow of refrigerant when passing through flow accelerating passage 92 receives a flow acceleration leading to a pressure drop within flow accelerating passage 92 so that the pressure P2 within flow accelerating passage 92 is lower than a pressure P1 in valve chamber 56.

The lower pressure P2 appearing within flow accelerating passage 92 is used in order to maintain valve element 72 in abutment with stop surface 76 of stroke limiter 54 by providing a connecting channel 102 provided with an opening 104 directed towards flow accelerating passage 92 and therefore detecting pressure P2 and extending towards an opening 106 formed by a pocket provided in stroke limiter 54 adjacent to stop surface 76 and open towards stop surface 76 so that the pressure P2 is also present in pocket 106 and assists in maintaining valve element 72 in its open position due to the fact the pocket 106 is sealed with respect to valve chamber 56 by sealing abutment of valve element 72 on stop surface 76.

Preferably opening 104 is arranged close to an outlet end 96 of flow accelerating passage 92, in particular at the transition of outer surface 82 of stroke limiter 54 to an upper surface 88 of stroke limiter 54 which is arranged on stroke limiter 54 on its side opposite to valve chamber 56 and directed towards outlet opening 86 so that opening 104 in part intersects outer surface 82 as well as upper surface 88.

Preferably, a plurality of channels 102 is provided in stroke limiter 54 so that openings 104 are arranged at a certain angular distance around central support 52 with respect to each other intersecting outer surface 82 of stroke limiter 54 as well as upper surface 88 of stroke limiter 54 respectively.

Preferably, in such a case pockets 106 are connected with each other and form a circular pocket within stop surface 76 between guide sleeve 58 and outer surface 82 of stroke limiter 54.

Preferably, this arrangement of openings 104 can also assist in releasing valve element 72 from abutting on stop surface 76 in case of a pressure drop in compressor outlet 22 occurs because then a back flow of refrigerant enters outlet opening 86 of check valve 10 and flows towards flow accelerating passage 92 and at the same time enters openings 104 and therefore increases the pressure within pocket 106 assisting in releasing valve plate 72 from its abutment on stop surface 76.

In case valve plate 72 is released from stop surface 76 by the back flow it will rapidly move in its closing position abutting on sealing surface 74 due to the flow of refrigerant through flow accelerating passage 92.

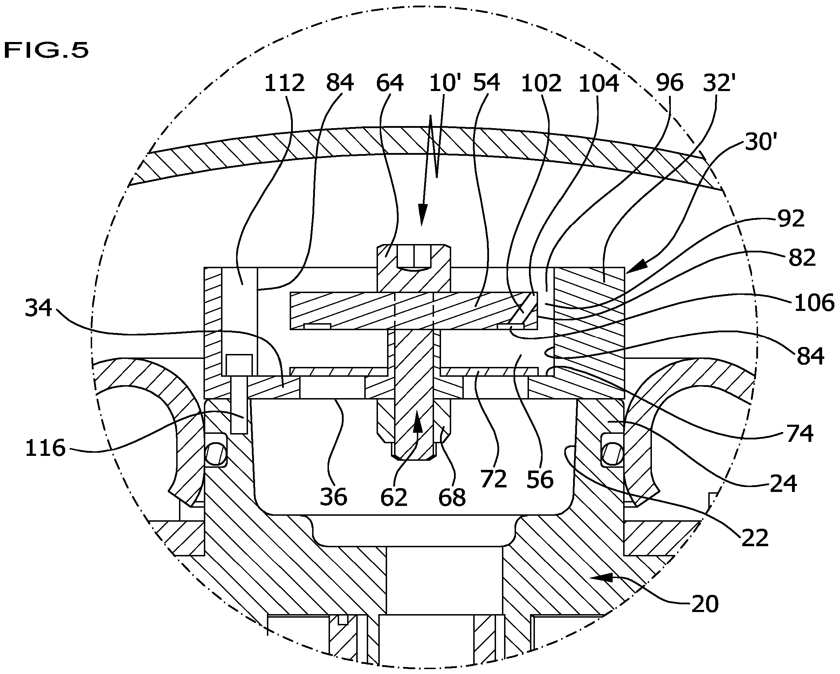

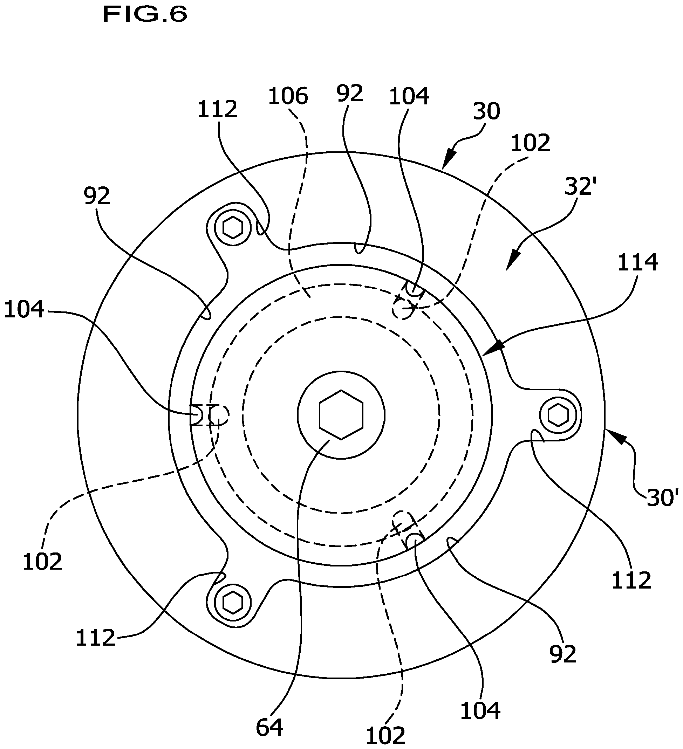

In a second embodiment of an check valve 10' according to the present invention shown in Figs. 5 and 6 those elements which are identical with the first embodiment have been designated with the same reference numerals so that with respect to the description thereof reference is made to the disclosure of these elements before.

Contrary to the first embodiment in the second embodiment outer section 32' of housing 30' is provided with recesses 112 extending radially outwardly from inner surface 84 of outer section 32' and consequently providing together with flow accelerating passages 92 arranged therebetween in summary an outlet passage 114 which only provides between the recesses 112 the flow accelerating passages 92 adjacent to which openings 104 of channels 102 can be arranged but the entire outlet passage 114 is provided with dimensions so that at the area of recesses 112 there will appear a minor acceleration of the flow of refrigerant whereas within flow accelerating passages 92 between recesses 112 sufficient flow acceleration will take place in order to provide the necessary pressure drop to a pressure P2 assisting in maintaining valve element 72 in its opening position abutting on stop surface 76.

Further as can be seen from Fig. 6 there is also provided a ring shaped pocket 106 extending around guide sleeve 58 within which pressure P2 will be established in case valve element 72 is in its open position as described in connection with the first embodiment.

According to the second embodiment recesses 112 can be used to receive mounting screws 116 for mounting bottom section 34 for example on a collar 24 of compressor 20 surrounding compressor outlet 22, in particular directly on a collar which is provided in a fixed scroll element.

With respect to all elements of the second embodiment not described in detail reference is made to the first embodiment.

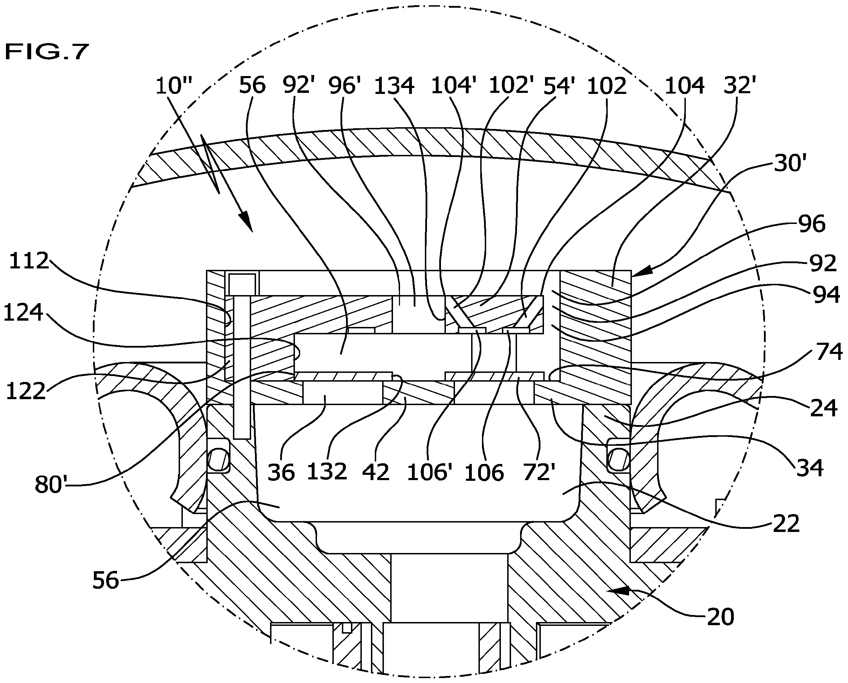

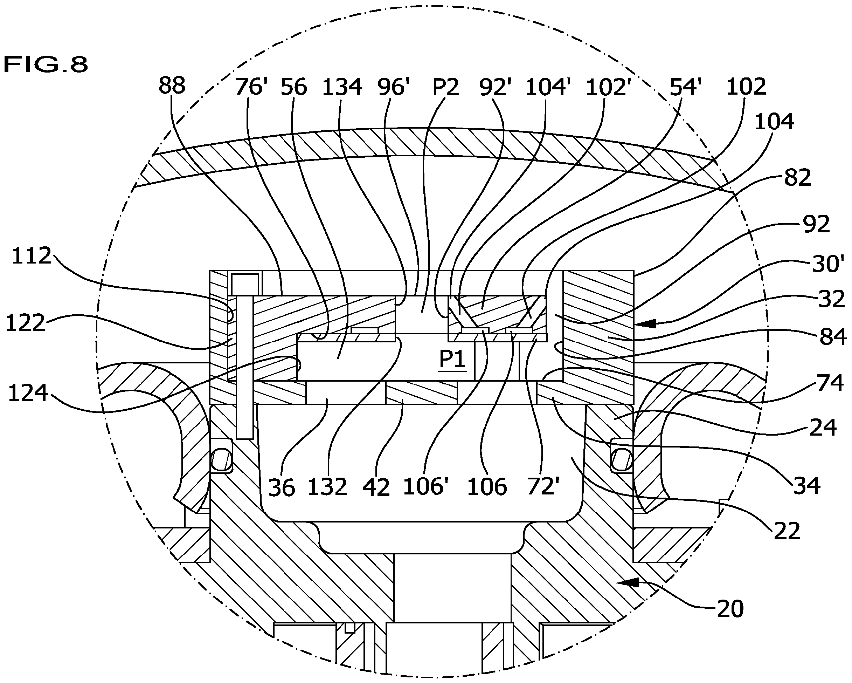

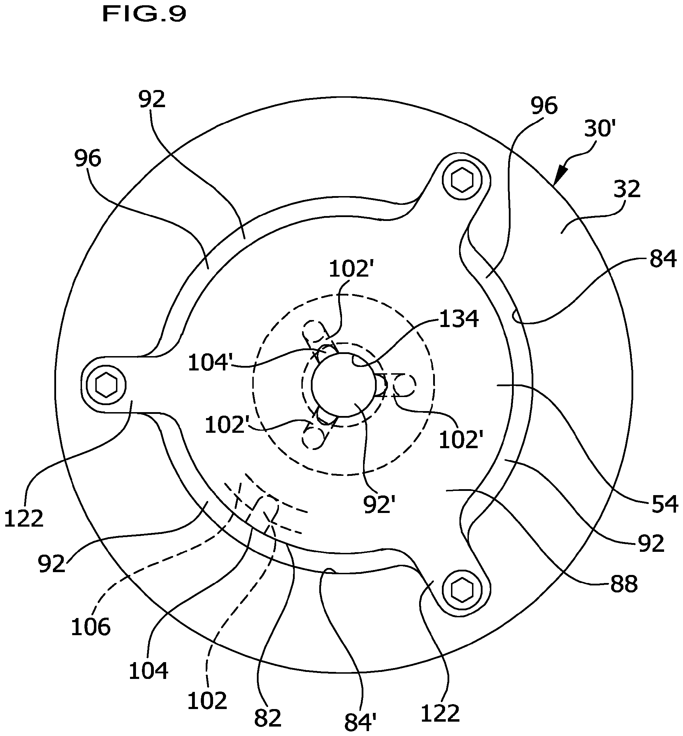

A third embodiment of a check valve 10" according to the present invention shown in Figs. 7 to 9 housing 30' and outer section 32' have the identical shape as in the second embodiment and recesses 112 receive arm sections 122 of stroke limiter 54' in order to fix stroke limiter 54' at a distance from bottom section 32 in order to provide valve chamber 56 between bottom section 34 and stroke limiter 54'.

However, this embodiment is not provided with a central support 52 surrounded by guide sleeve 58 for guiding valve element 72'.

Instead valve element 72' is guided by guide surfaces 124 of arm sections directed towards and contacting outer rim 80' of valve element 72' for guiding valve element 72' between its closing and opening positions.

According to this embodiment valve element 72' in its closing position covers bottom opening 36 and prevents any flow from valve chamber 56 through bottom opening 36 into outlet 22 of compressor 20 by sealingly abutting on sealing surface 74 of bottom section 34.

However, valve element 72' is provided with a central opening 132 having a diameter smaller than central body 42 so that central opening 132 in the closing position of valve element 72' is kept closed by central body 42.

When moved into its opening position central opening 132 opens into a central flow accelerating passage 92' arranged within stroke limiter 54' and having a diameter essentially the same or smaller than central opening 132 within valve element 72' so that the refrigerant flow entering valve chamber 56 through bottom opening 36 can flow through flow accelerating passage 92' in stroke limiter 54 establishing therein a pressure P2 which is lower than the pressure P1 in valve chamber 56.

This pressure P2 can be conducted by connection channel 102' extending within stroke limiter 54' from opening 104' arranged at the transition between flow conducting surface 134 of flow accelerating passage 92 and upper surface 88 of stroke limiter 54'.

Further connection channel 102' is further connected with pocket 106' arranged within stop surface 76' of stroke limiter 54'.

Stroke limiter 54' with its outer surface 82 is extending between arms 122 faces inner surface 84 of outer section 32 as described in the second embodiment so that there can be also formed flow passages 92 also providing a pressure reduction to a pressure P2 so that - if necessary - this pressure P2 can be also guided by additional connection channels 102 having openings 104 arranged at the same location as described in the first or second embodiment to additional pockets 106 in stop surface 76'.

With respect to all elements of the third embodiment not described in detail reference is made to the first embodiment.

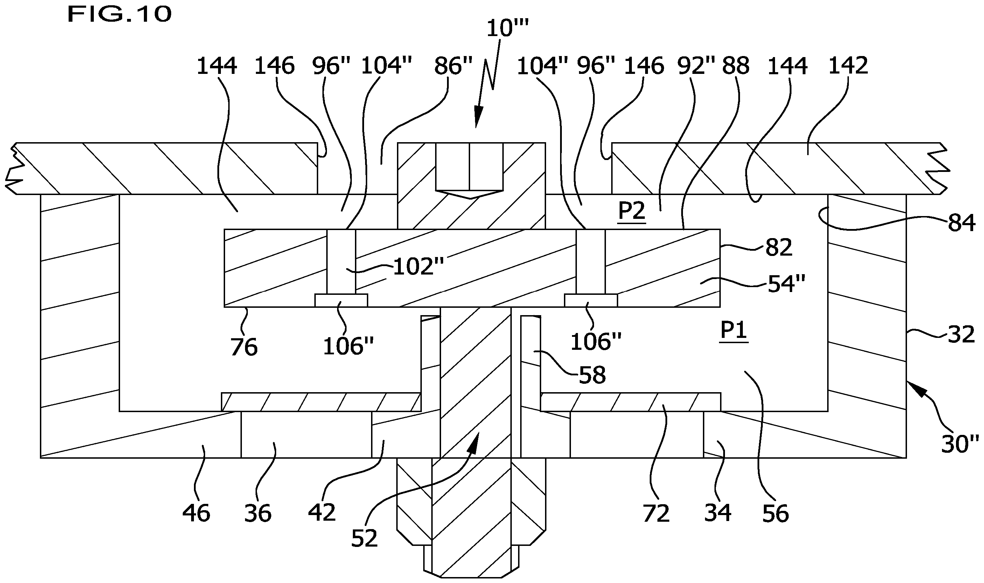

In a fourth embodiment of a check valve 10"' according to the present invention and shown in Fig. 10 housing 30" has a similar shape than according to the first embodiment and also stroke limiter 54" is supported in the same manner by central support 52 as described in connection with the first embodiment.

Further the bottom opening 36 within bottom section 34 is designed similarly to the first embodiment.

However, according to the fourth embodiment housing 30" does not only comprise outer section 32 but also a top section 142 extending at least in part on a side of stroke limiter 54" opposite to valve chamber 56 such that it faces upper surface 88 of stroke limiter 54" with its wall surface 144 forming between upper surface 88 and wall surface 144 a flow accelerating passage 92" whereas inner surface 84 of outer section 32 extends in such a distance around outer surface 82 of stroke limiter 54" such there will be no flow acceleration between there.

Formation of flow accelerating passage 92" between top section 142 and upper surface 88 also leads to a pressure reduction to a pressure P2 with respect to pressure P1 in valve chamber 56 which can be conducted by channels 102" to pockets 106" arranged on stop surface 76 of stroke limiter 54".

Preferably openings 104" of channels 102" are arranged on upper surface 88 of stroke limiter 54" such that they are facing a transition from wall surface 144 to wall surfaces 146 of top section 142 extending transverse to wall surfaces 144 and limiting an outlet opening 86" of valve housing 30" which outlet opening 86" is arranged on a side of stroke limiter 54" opposite to valve chamber 56 and opposite to stop surface 76 for valve element 72.

For example, top section 142 of housing 30" can be made in one piece with outer section 32 or by a separate element abutting on outer section 32 of housing 30" in order to form flow accelerating passage 92" between top section 142 and a portion of upper surface 88 of stroke limiter 54".

With respect to all elements of the fourth embodiment not described in detail reference is made to the first embodiment.

The aforementioned embodiments of check valves can be used in various compressors, in particular in case these compressors use propane as refrigerant.

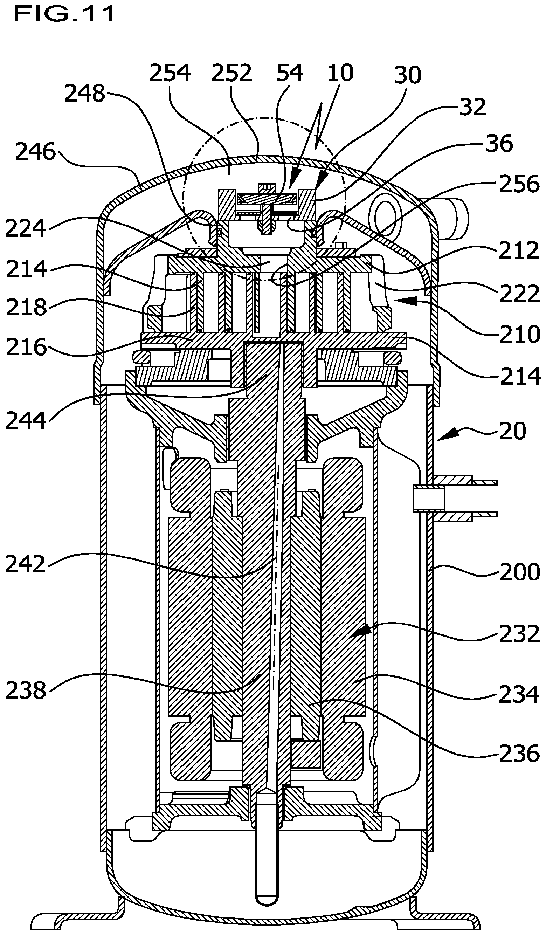

For example, a first embodiment of a compressor 20, as shown in Fig. 11, comprises an outer housing 200 within which a scroll unit 210 is arranged.

Scroll unit 210 comprises a first scroll element 212 provided with a first scroll rib 214 as well as a second scroll element 216 provided with a second scroll rib 218.

Scroll elements 212 and 216 are arranged such that scroll ribs 214 and 218 engage in one another in order to form chambers between the scroll ribs 214 and 218 for compressing refrigerant which flows to an intake 222 and after being compressed leaves first scroll element 212 through a central outlet 224, preferably arranged within first scroll element 212.

For example, first scroll element 212 is fixed within outer housing 200 whereas second scroll element 216 is moved on an orbital path with respect to first scroll element 212.

For moving second scroll element 216 on an orbital path with respect to first scroll element 212 drive motor 232 is comprising a stator 234 fixedly arranged within housing 200 and a rotor 236 driving a drive shaft 238 which is held rotatable with respect to its axis of rotation 242.

Further drive shaft 238 is provided with a driver 244 arranged eccentric with respect to axis of rotation 242 in order to initiate an orbital movement of second scroll element 216 when drive shaft 238 rotatably driven by drive motor 232.

According to this design first scroll element 212 is fixed within outer housing 200 by a separating body 246 supported by outer housing 200 and further supporting first scroll element 212 by its collar 248 which corresponds to collar 24 on which housing 30 of check valve 10 according to the first embodiment of the check valve 10 according to the present invention is mounted.

Further details of such a scroll compressor 20 are disclosed in US 9,039,384 B2 to which reference is made herewith.

In this case check valve 10 operates as an anti-rotation valve for scroll unit 210 avoiding a back flow of compressed refrigerant being collected in an outlet chamber 254 arranged between end portion 252 of outer housing 212 and separating body 246 extending at a distance from end portion 252 in order to form the outlet chamber 254 between separating body 246 and end portion 252 so that check valve 10 prevents refrigerant compressed to outlet pressure in outlet chamber 254 to flow back into outlet opening 256 of scroll unit 210 and rotates scroll element 216 in a direction opposite to the direction driven by drive motor 232 in case drive motor 232 stops.

In particular if check valve 10 is used as an anti-rotation valve a cross section of outlet passage 94 comprising at least one flow accelerating passage 92 corresponds to 100% to 200 % of a cross section of central compressor outlet 224.

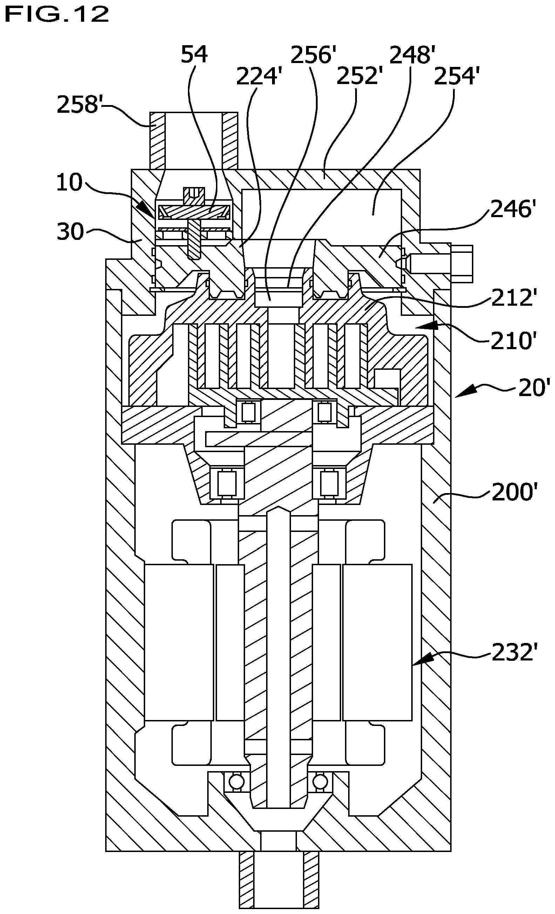

For example, a second embodiment of a compressor 20' shown in Fig. 12 is provided with a scroll unit 210 operating essentially in the same manner as the first embodiment of the compressor and driven by a drive motor 232' also designed similar to the drive motor according to the first embodiment of the compressor 20.

However, according to the second embodiment of the compressor 20' the first scroll element 212' is provided with a collar 248' which directly opens into outlet chamber 254' arranged between end portion 252' of outer housing 200' and a separating body 246' fixed within outer housing 200'.

In particular in case scroll unit 210' is a small scroll unit there is no need for providing an anti-rotation valve between outlet opening 256' of scroll unit 210' and outlet chamber 254'.

In this case a check valve, for example a check valve 10, according to the first embodiment, will be arranged between outlet chamber 254' and a piping connection 258' on outer housing 200', which piping connection 258' is designed to be connected to piping on a high pressure side of a refrigerant circuit.

In particular in the second embodiment the components of housing 30 are integrated in separating body 246' within housing 200'.

In particular the check valve 10 according to the present invention can be arranged in different locations such a for example directly on the fixed scroll element 212 in/on the separating body 246 according to the first embodiment or in/on parts of the housing 200.

Elements of these parts of a compressor like walls, surfaces, or other components can be used to act as required elements to create the reduced pressure at the opening 104 of the connection channel 102.

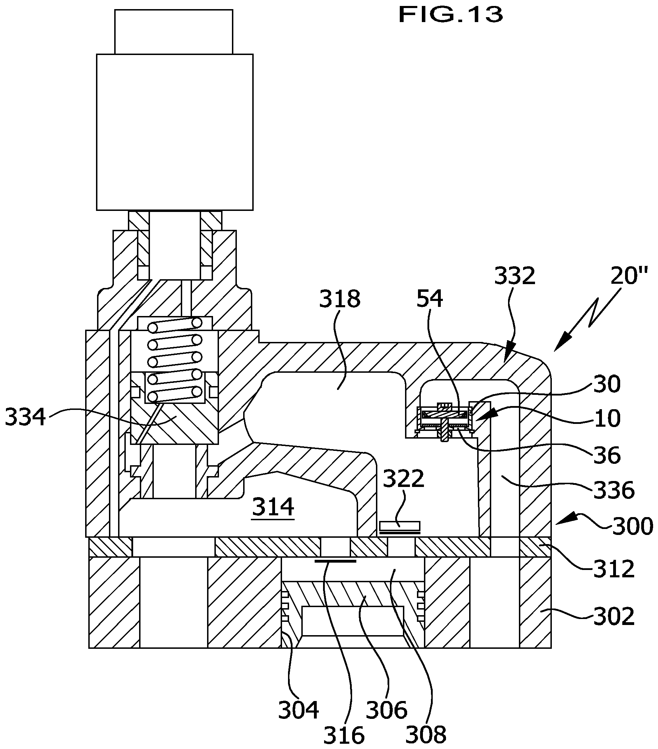

In a third embodiment of a compressor 20" which is designed as a piston compressor, having an overall housing 300, which is shown in part in Fig. 13 by showing a cylinder housing 302 comprising at least one cylinder bore 304 in which a piston 306 is moving back and forth in order to compress refrigerant in a cylinder chamber 308 arranged in cylinder bore 304 between piston 306 and a valve plate 312 covering cylinder bore 304 by moving piston 306 back and forth refrigerant is compressed in cylinder chamber 308 by first being sucked into cylinder chamber 308 from inlet chamber 314 through inlet valve 316 arranged in valve plate 312 and then after being compressed and pushed out into outlet chamber 318 through check valve 322 arranged in valve plate 312.

Inlet chamber 314 and outlet chamber 318 are arranged in a cylinder head 332 covering valve plate 312 and comprising inlet chamber 314 and outlet chamber 318 arranged over valve plate 312.

Further details of a piston compressor 20" according to the third embodiment are disclosed in WO 2018/065071 A1 to which reference is made herewith.

In particular in case cylinder head 332 is provided with a mechanical valve 334 able to connect inlet chamber 314 and outlet chamber 318 an check valve 10 according to the first embodiment of the present invention is arranged in cylinder head 332 in order to prevent a back flow from an outlet channel 336 subsequent to outlet chamber 318 in order to decouple the pressure within outlet channel 336 from outlet chamber 318 and enabling pressure equalization between inlet chamber 314 and outlet chamber 318 by mechanical valve 334 without affecting the pressure in outlet channel 336.

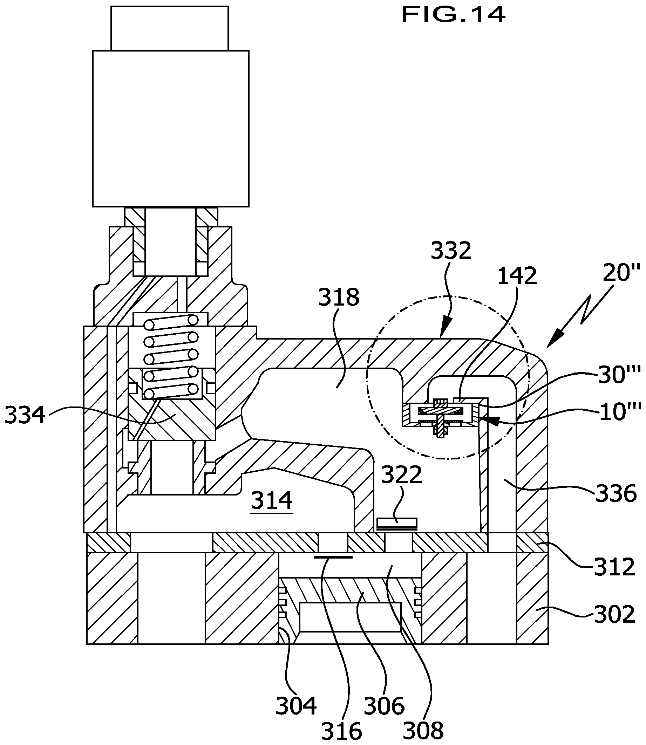

According to a fourth embodiment shown in Fig. 14 of a compressor 20"' which is of the same general design as explained in connection with the third embodiment so that reference is made thereto.

A valve 10 "' according to the fourth embodiment shown in Fig. 10 is used and in this case housing 30" of the valve as explained in connection with the fourth embodiment of the check valve 10"' is for example provided in part by cylinder head 332 in particular insofar as cylinder head 332 provides the top section 142 of housing 30" for forming flow accelerating passages 92" between wall surface 144 of top section 142 and upper surface 88 of stroke limiter 54".

## Claims

1. Check valve (10) for a refrigerant compressor (20) comprising a valve housing (30) having a bottom section (34) with a bottom opening (36) enabling a flow of refrigerant into and out of a valve chamber (56) arranged within the valve housing (30), said valve chamber (56) extending between the bottom section (34) and a stroke limiter (54) arranged at a distance from said bottom section (34),
a valve element (72) arranged in the valve chamber (56) and being moveable in said valve chamber (56) between said bottom section (34) and said stroke limiter (54),
the valve element (72) in a closing position is abutting on a sealing surface (74) of the bottom section (34) and prevents a flow of refrigerant out of said valve chamber (56) through said bottom opening (36) and in an opening position the valve element (72) is abutting on a stop surface (76) of said stroke limiter (54) wherein in the opening position of the valve element (72) a flow of refrigerant after having entered the valve chamber (56) leaves the valve chamber (56) through at least one outlet passage (94, 114) wherein the at least one outlet passage (94, 114) comprises at least one flow accelerating passage (92) and therein provides a flow region of reduced refrigerant pressure (P2) with respect to the refrigerant pressure (P1) within the valve chamber (56) and wherein at least one connection channel (102) extending in said stroke limiter (54) comprises an opening (104) arranged close to the flow region of reduced refrigerant pressure (P2) for capturing the reduced refrigerant pressure (P2) and for transferring said reduced refrigerant pressure (P2) to an opening (106) arranged in an area of the stop surface (76) of the stroke limiter (54) on order to support retaining of the valve element (72) in its opening position.

2. Check valve according to claim 1, wherein the opening (104) of the connection channel (102) is located adjacent an outlet end (96) of said flow accelerating passage (92).

3. Check valve according to claim 1 or 2 wherein the opening (104) of the connection channel (102) is located at the transition of a surface section (82, 88) of the stroke limiter (54) limiting the flow accelerating passage (92, 92', 92") and a surface section (88) of the stroke limiter (54) extending outside of said flow accelerating passage (92) and opposite to said stop surface (76).

4. Check valve according to one of the preceding claims, wherein the opening (106) in the stop surface (76) of the stroke limiter (54) is an opening of a pocket (106) arranged in the stroke limiter (54) and open to the stop surface (76).

5. Check valve according to one of the preceding claims, wherein the opening (106) is at least a section of an opening of a circular groove extending within the stroke limiter (54) and open to the stop surface (76).

6. Check valve according to one of the preceding claims, wherein said valve element (72) is freely moveable between its opening and closing position.

7. Check valve according to one of the preceding claims, wherein the valve element (72) in its opening position extends essentially parallel to its closing position.

8. Check valve according to one of the preceding claims, wherein the valve element (72) in its opening position releases the flow of refrigerant entering the valve chamber (56) through said bottom opening (36) to exit at least in part through said flow accelerating passage (92).

9. Check valve according to one of the preceding claims, wherein said flow accelerating section (92) extends towards an outlet opening (86) of the housing (30) of said check valve (10) arranged on a side of said stroke limiter (54) opposite to said bottom section (34).

10. Check valve according to one of the preceding claims, wherein said flow accelerating passage (92) extends between an outer surface (82, 88) of the stroke limiter (54) and a surface (84, 144) of the housing (30) facing said outer surface (82, 88), in particular wherein said at least one flow accelerating passage (92) extends transverse to said valve element (72) in its opening position and/or wherein in particular said flow accelerating passage (92) extends transverse to said bottom section (34) and/or wherein in particular the outer surface (82, 88) of said stroke limiter (54) and said inner surface (84) of said outer section (32) of said housing (30) extend transverse to said bottom section (34) of said housing (30).

11. Check valve according to one of claims 1 to 10, wherein said flow accelerating passage (92") extends along a section of an upper surface (88) of said stroke limiter (54) arranged on said stroke limiter (54) on a side opposite to said valve chamber (56), in particular wherein said flow accelerating passage (92") extends between the section of said upper surface (88) of said stroke limiter (54) and a surface (144) of a top section (142) of said housing (30) facing the section of said upper surface (88).

12. Check valve according to one of the preceding claims, wherein the flow accelerating passage (92') extends through the stroke limiter (54') only, in particular wherein valve element (72') is provided with an opening (132) which in the opening position of valve element (72') releases a flow of refrigerant from said outlet chamber (56) through said flow accelerating passage (92) extending through said stroke limiter (54').

13. Check valve according to one of the preceding claims, wherein a plurality of flow accelerating passages (92) is provided.

14. Check valve according to one of the preceding claims, wherein a plurality of connection channels (102) is provided in said stroke limiter (54).

15. Scroll compressor provided with an check valve (10), according to one of claims 1 to 19, wherein said check valve (10) is arranged between an outlet (224) of the scroll unit (210) and an outlet chamber (254) arranged within an outer housing (200) of said scroll compressor (20), in particular wherein said check valve (10) is directly mounted on an outlet (224) of the scroll unit (210) of said scroll compressor (20), in particularwherein a cross section of said outlet passage (94) which comprises at least one flow accelerating passage (92) corresponds to 100% to 200% of a cross section of the outlet (224) of the scroll unit (210).

16. Scroll compressor provided with an check valve (10) according to one of claims 1 to 14, wherein said check valve (10) is arranged between an outlet chamber (254') arranged within the outer housing (200') of said scroll compressor (22') and a piping connection (258') on said outer housing (200').

17. Compressor provided with an check valve (10) according to one of claims 1 to 14, wherein said check valve (10) is arranged between an outlet chamber (318) and an outlet channel (336) of the compressor 20", 20"'), in particular wherein said check valve (10) is arranged on a cylinder head (332) covering a valve plate (312) of the compressor (20", 20"').
